# EUROPEAN PATENT SPECIFICATION

(11) **EP 0 678 406 B1**
(45) Date of publication and mention of the grant of the patent: **04.11.1998**
(21) Application number: 95102869.5
(22) Date of filing: 01.03.1995
(51) Int. Cl.: B60G 17/015

(54) **An automatic system for varying the stiffness and/or the damping of the suspension of a motor vehicle**
Automatisches System zur Veränderung der Aufhängungssteifigkeit und/oder Dämpfung eines Kraftfahrzeuges
Système automatique pour faire varier la raideur et/ou l'ammortissement d'une suspension d'un véhicule automobile

(30) Priority: 20.04.1994 IT TO940315
(43) Date of publication of application: 25.10.1995
(73) Proprietor: FIAT AUTO S.p.A., 10135 Torino (IT)
(72) Inventor: Torrielli, Vittorino, I-10127 Torino (IT)
(74) Representative: Serra, Francesco

(56) References cited:
- EP-A- 0 306 819
- EP-A- 0 518 056
- DE-A- 3 407 260
- PATENT ABSTRACTS OF JAPAN vol. 12 no. 113 (M-683) ,9 April 1988 & JP-A-62 241717 (FUJITSU TEN)
- PATENT ABSTRACTS OF JAPAN vol. 14 no. 432 (M-1026) ,17 September 1990 & JP-A-02 171310 (AISIN SEIKI)
- PATENT ABSTRACTS OF JAPAN vol. 18 no. 186 (M-1585) ,30 March 1994 & JP-A-05 345510 (NIPPONDENSO)
- PATENT ABSTRACTS OF JAPAN vol. 7 no. 217 (M-245) ,27 September 1983 & JP-A-58 112819 (NIPPON DENSO)
- PATENT ABSTRACTS OF JAPAN vol. 11 no. 247 (M-615) ,12 August 1987 & JP-A-62 055267 (TOYODA MACH)
- PATENT ABSTRACTS OF JAPAN vol. 14 no. 556 (M-1057) ,11 December 1990 & JP-A-02 237809 (ATSUGI UNISIA)

## Description

The present invention relates to an automatic system for controlling the suspension of a motor vehicle, of the kind defined in the preamble of Claim 1.

Systems for varying the stiffness and/or the damping of the suspension in dependence on factors such as the style of driving adopted (soft or sports), the speed of the car, the type of route tackled (winding or flat) and the type of road surface (broken or smooth) are becoming ever more widespread in top-range motor vehicle.

Systems for varying the stiffness and/or the damping of suspension are essentially of two types: manual systems in which the driver decides the type of calibration desired for the suspension and sets it, for example, by means of a push-button, or automatic systems, in which the stiffness and/or the damping of the suspension are varied automatically by an electronic control unit which, on the basis of the signals supplied by a series of sensors, operates the actuators which vary the stiffness and/or the damping of the suspension.

The present invention relates to the latter type of device for varying the stiffness and/or the damping of suspension, that is, to a device in which the variation of the stiffness and/or the damping of the suspension is automatic.

EP-A-0 306 819 discloses an automatic system for controlling the suspensions of a motor vehicle according to the preamble of Claim 1, comprising an electronic control unit connected to controlled actuator means operable to vary the stiffness and/or the damping of the suspensions. The control unit is connected to a detector which provides signals indicative of the steering angle, to a sensor which provides signals indicative of the speed of advance of the vehicle and to an accelerometer which provides signals indicative of the longitudinal and lateral accelerations of the vehicle body.

The control unit is arranged to activate the controlled actuator means on the basis of the said signals.

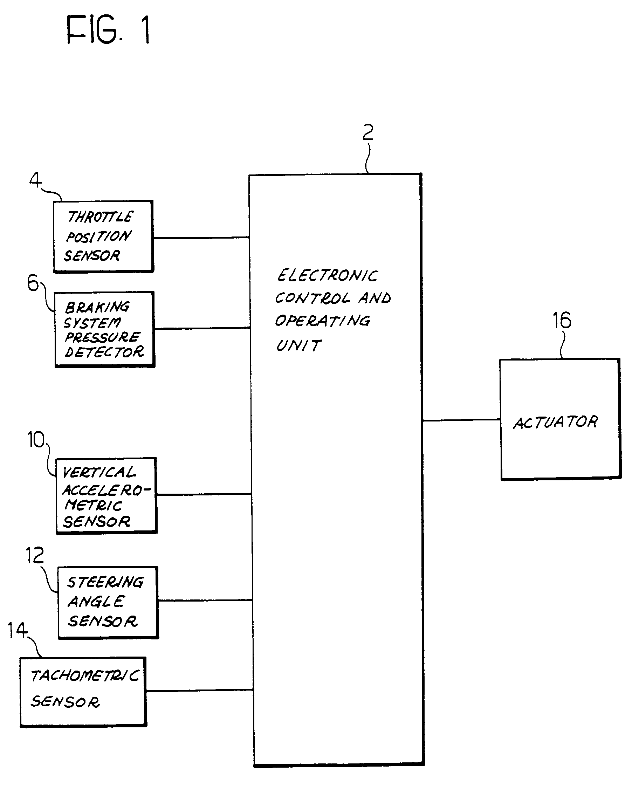

Another system of this type according to the prior art is shown in Figure 1, in which an electronic control and operating unit for varying the stiffness and/or the damping of the suspension is indicated 2.

The control unit 2 is connected to a throttle-position sensor 4, a device 6 for detecting the pressure in the braking system, a vertical accelerometric sensor 10, a steering-angle sensor 12, and a tachometric sensor 14.

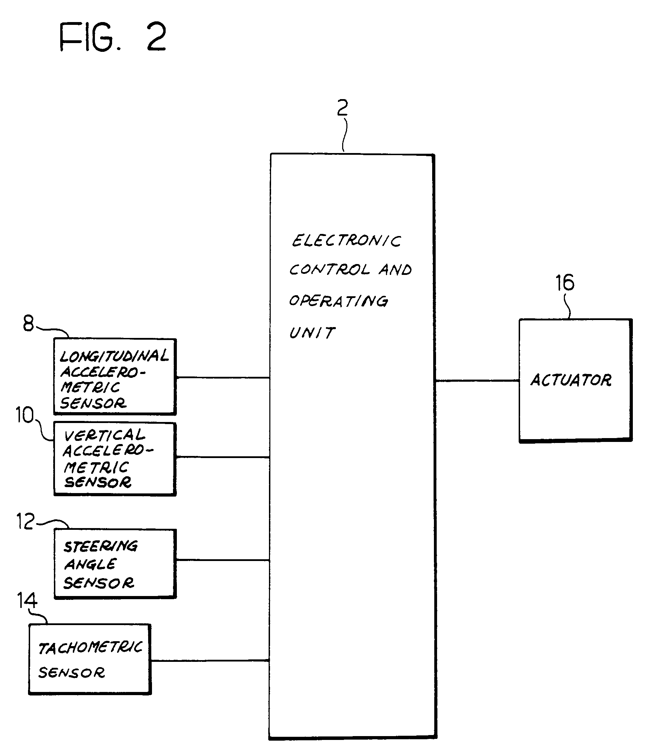

Another system according to the prior art is shown in Figure 2, in which parts corresponding to those of Figure 1 are indicated by the same reference numerals and in which a longitudinal accelerometric sensor 8 performs the functions of the blocks 4 and 6 of Figure 1.

With reference to Figures 1 and 2, the output of the control unit 2 is connected to an actuator 16 for varying the stiffness and/or the damping of the suspension.

The control unit 2 pilots the actuator 16 on the basis of the signals received from the sensors mentioned above according to strategies which are not described herein since they fall outside the present invention and are known to persons in the art.

It is clear from the foregoing that the sensors mentioned represent both a considerable intrinsic cost and a considerable fitting cost and, moreover, given their large numbers, breakdowns are not impossible and could cause critical conditions in the system for varying the stiffness and/or the damping of the suspension.

The object of the present invention is that of providing an improved automatic system for varying the stiffness and/or the damping of the suspension of a motor vehicle.

The invention achieves the aforesaid objects by virtue of an automatic system for controlling the suspension of a motor vehicle having the features defined in claim 1.

The invention will now be described purely by way of non-limiting example, with reference to the appended drawings, in which:
Figure 1 and Figure 2 (which have already been described) show, in the form of block diagrams, automatic systems for varying the stiffness and/or the damping of suspensions, according to the prior art,
Figure 3 shows, in the form of a block diagram, a first embodiment of the automatic system for varying the stiffness and/or the damping of suspension according to the invention, and
Figure 4 shows, in the form of a block diagram, a second embodiment of the automatic system for varying the stiffness and/or the damping of suspension according to the invention.

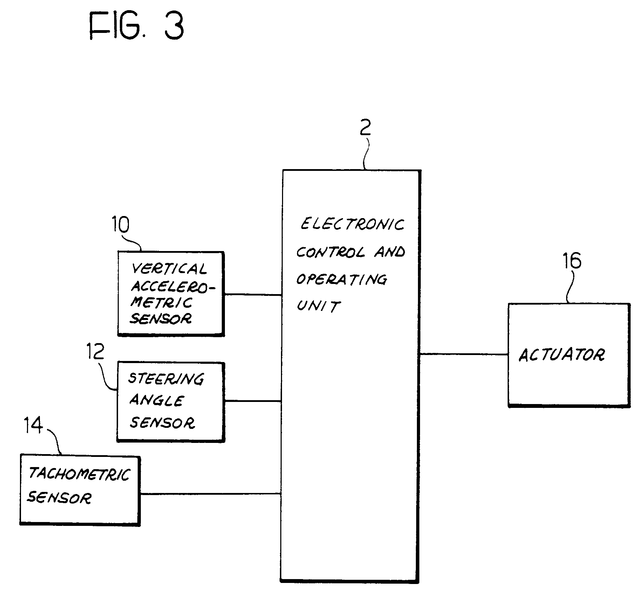

With reference to Figure 3, in which parts corresponding to those of Figure 1 are indicated by the same reference numerals, an electronic control unit, indicated 2, receives input signals coming from a vertical accelerometer 10, from a steering-angle sensor 12, and from a tachometric sensor 14.

The output of the control unit 2 is connected to an actuator 16 for varying the stiffness and/or the damping of the suspension.

As can be seen, in comparison with Figures 1 and 2, in Figure 3 there is no longer a throttle-position sensor 4, a sensor 6 for detecting the pressure in the braking circuit, or a longitudinal accelerometer 8, their signals being replaced by the processing of the signal supplied to the control unit 2 by the tachometric sensor 14.

The tachometric sensor 14 is usually connected to the output shaft of the gearbox and gives the speed of the car, which corresponds to the speed of the wheels, except in conditions of slippage or locking of the wheels.

The operation of the system according to the invention in the configuration of Figure 3 is described, apart from the reactions of the control unit in dependence on the signals coming from the steering sensor 12 and the vertical accelerometer 10, upon the assumption that the speed of the car normally corresponds to the speed of the wheels.

The tachometric signal coming from the tachometric sensor 14 is sent to the control unit 2. By means of software, the control unit 2 processes the speed signal acquired, filtering it to eliminate the effect of the vibrations of the wheels on the signal, calculates the differential of the filtered wheel speed as ΔVel in a time interval Δt of about, for example 100/200 milliseconds, obtaining its acceleration which, in turn, is differentiated as ΔAcc in a time interval Δt of about, for example, 200-300 milliseconds. The control unit 2 assumes that the car is subject to a longitudinal acceleration or deceleration such that it operates the actuator 16 so as to increase the stiffness and/or the damping of the suspension either when the first speed differential exceeds a predetermined threshold value, for example 2 m/s², or when the second speed differential exceeds another predetermined threshold value, for example 30 dm/s³.

The comparison of the second differential with this threshold serves essentially to speed up the recognition by the control unit 2 of the situations in which it is advisable to stiffen and/or increase the damping of the suspension.

When the values of the first and second speed differentials return below the thresholds set, after a certain time, the suspension returns to its less stiff and/or damped condition.

If the actuator 16 allows for several levels of stiffness and/or damping, corresponding operating thresholds can be set for both the first and the second differentials of the speed, a different level of stiffness and/or damping being associated with each threshold.

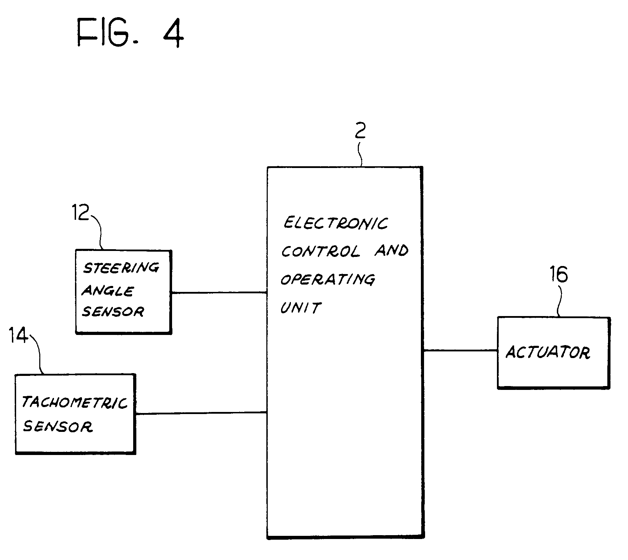

With reference to Figure 4, the electronic control unit, indicated 2, receives input signals from a steering angle sensor 12 and from a tachometric sensor 14.

The output of the control unit 2 is connected to an actuator 16 for varying the stiffness and/or the damping of the suspension.

As can be seen by comparison with Figure 3, in Figure 4, the vertical accelerometer 10 of Figure 3 is no longer present. The signal of the vertical accelerometer is advantageously replaced by the datum of the second differential of the wheel speed, since the Applicant has found a close interdependence between the second differential of the wheel speed, calculated as mentioned above, and the vertical acceleration of the body, filtered at its natural frequency.

The reason for the interdependence between these two quantities is that, when oscillations of the body occur at around its natural frequency, variations occur in the forces transmitted from the ground to the tyre and these vary the rolling radius of the wheel, creating accelerations and decelerations of the wheel which, when differentiated, provide a datum on the vertical acceleration of the body. It has been found that, if the body is subject to a vertical acceleration of 2-3 m/s², filtered at its natural frequency, the second differential of the wheel speed assumes a value of about 2.5-3.5 m/s³ and the two quantities can therefore easily be correlated.

This differential value can therefore be used instead of the value supplied by the vertical accelerometer of Figure 3.

In this case, in which the vertical accelerometer is not present, the control unit 2 brings about a stiffening and/or an increase in the damping of the suspension when a predetermined threshold is exceeded by the second differential of the speed of advance of the vehicle which, as has been seen, can easily be correlated to the vertical acceleration of the body.

This predetermined threshold has been checked experimentally and is of the same order of magnitude as that which, in the system with a vertical accelerometer, would suffice to speed up the recognition of the situations in which it is advisable to stiffen and/or increase the damping of the suspension.

Naturally, the principle of the invention remaining the same, the details of construction and forms of embodiment may be varied widely with respect to those described and illustrated, without thereby departing from the scope of the present invention. In particular, the numerical values relating to the operating thresholds for the variation of the stiffness of the suspension may differ according to the type of car used or to the type of suspension used.

## Claims

1. An automatic system for controlling the suspension of a motor vehicle, comprising:
- electronically-controlled actuator means (16) which, when activated, can bring about an increase in the stiffness and/or the damping of the suspension of the motor vehicle,
- detector means (12) for providing electrical signals indicative of the steering angle,
- sensor means (14) for providing electrical signals indicative of the speed of advance of the motor vehicle,
- means (10, 2) for generating signals indicative of the acceleration of the body of the motor vehicle along a predetermined direction;
- an electronic control and operating unit (2) connected to the actuator means (16), and to the detector means (12), the generating means (10, 2) and the sensor means (14), and to activate the actuator means (16) on the basis of the signals supplied by the sensor means (14), the generating means (10, 2) and the detector means (12);
characterised in that said generating means (10, 2) are arranged for generating signals indicative of the vertical acceleration of the body of the motor vehicle;
said unit (2) being arranged:
- to generate signals or data indicative of the first and second time differentials of the speed of advance of the motor vehicle, the first differential being indicative of the longitudinal acceleration of the motor vehicle, and the second differential being indicative of the rate of change of the longitudinal acceleration,
- to compare the values of the first and second differentials with respective predetermined threshold values, and
- to activate the actuator means (16) when the value of the first or second differential of the speed of advance of the motor vehicle exceeds the associated threshold value.

2. A system according to Claim 1, wherein said generating means comprise an accelerometer (10) connected to said unit (2).

3. A system according to Claim 1, characterised in that the means for generating signals indicative of the vertical acceleration of the body are constituted by the electronic control and operating unit (2) which is arranged to calculate and to compare with a predetermined threshold, the second differential of the speed of advance of the motor vehicle, which is quantitatively correlated to the vertical acceleration of the body.

## Patentansprüche

1. Automatisches System, um die Aufhängung eines Kraftfahrzeugs zu steuern, wobei das System enthält:
- ein elektronisch gesteuertes Stellglied (16) das dann, wenn es betätigt wird, die Steifigkeit und/oder die Dämpfung der Aufhängung eines Kraftfahrzeugs vergrößern kann;
- eine Fühlereinrichtung (12), um elektrische Signale zu liefern, die den Lenkungseinschlag angeben;
- eine Fühlereinrichtung (14), um elektrische Signale zu liefern, die die Fahrgeschwindigkeit des Kraftfahrzeugs angeben;
- eine Einrichtung (10, 2), um Signale zu erzeugen, die die Beschleunigung des Aufbaus des Kraftfahrzeugs längs einer vorgegebenen Richtung angeben;
- eine elektronische Steuer- und Betätigungseinheit (2), die mit dem Stellglied (16) und mit der Fühlereinrichtung (12), mit der Generatoreinrichtung (10, 2) sowie mit der Fühlereinrichtung (14) verbunden ist, um das Stellglied (16) aufgrund jener Signale zu betätigen, die von der Fühlereinrichtung (14), der Generatoreinrichtung (10, 2) und der Fühlereinrichtung (12) geliefert werden;
dadurch gekennzeichnet, daß die Generatoreinrichtung (10, 2) so aufgebaut ist, um Signale zu erzeugen, die die Vertikalbeschleunigung des Aufbaus des Kraftfahrzeugs angeben;
wobei die Einheit (2) so aufgebaut ist, um:
- Signale oder Daten zu erzeugen, die die erste und zweite zeitliche Ableitung der Fahrgeschwindigkeit des Kraftfahrzeugs angeben, wobei die erste Ableitung die Längsbeschleunigung des Kraftfahrzeugs angibt, und wobei die zweite Ableitung die Änderungsgeschwindigkeit der Längsbeschleunigung angibt;
- die Werte der ersten und zweiten Ableitung mit entsprechenden vorgegebenen Schwellenwerten zu vergleichen; und
- das Stellglied (16) zu betätigen, wenn der Wert der ersten oder zweiten Ableitung der Fahrgeschwindigkeit des Kraftfahrzeugs den zugeordneten Schwellenwert überschreitet.

2. System gemäß Anspruch 1, wobei die Generatoreinrichtung einen Beschleunigungsmesser (10) enthält, der mit der Einheit (2) verbunden ist.

3. System gemäß Anspruch 1, dadurch gekennzeichnet, daß die Einrichtung zum Erzeugen von Signalen, die die Vertikalbeschleunigung des Aufbaus angeben, von einer elektronischen Steuer- und Betätigungseinheit (2) gebildet wird, die so aufgebaut ist, um die zweite Ableitung der Fahrgeschwindigkeit des Kraftfahrzeugs, die größenmäßig mit der Vertikalbeschleunigung des Aufbaus korreliert ist, zu berechnen und mit einem vorgegebenen Schwellenwert zu vergleichen.

## Revendications

1. Système automatique de réglage de la suspension d'un véhicule à moteur, comprenant :
- un dispositif (16) à organe de manoeuvre commandé électroniquement qui, lorsqu'il est activé, peut assurer une augmentation de la raideur et/ou de l'amortissement de la suspension du véhicule à moteur,
- un dispositif détecteur (12) destiné à donner des signaux électriques représentatifs de l'angle de direction,
- un dispositif capteur (14) destiné à donner des signaux électriques représentatifs de la vitesse d'avance du véhicule à moteur,
- un dispositif (10, 2) destiné à créer des signaux représentatifs de l'accélération du châssis du véhicule à moteur dans une direction prédéterminée, et
- une unité électronique (2) de commande et d'exploitation connectée au dispositif à organe de manoeuvre (16) et au dispositif détecteur (12), au dispositif générateur (10, 2) et au dispositif capteur (14), et destinée à activer le dispositif à organe de manoeuvre (16) en fonction des signaux transmis par le dispositif capteur (14), le dispositif générateur (10, 2) et le dispositif détecteur (12),
caractérisé en ce que le dispositif générateur (10, 2) est destiné à créer des signaux représentatifs de l'accélération verticale du châssis du véhicule à moteur,
ladite unité (2) étant telle que :
- elle crée des signaux ou données représentatifs de la dérivée première et de la dérivée seconde en fonction du temps de la vitesse d'avance du véhicule à moteur, la dérivée première étant représentative de l'accélération longitudinale du véhicule à moteur et la dérivée seconde étant représentative de la vitesse de variation de l'accélération longitudinale,
- elle compare les valeurs de la dérivée première et de la dérivée seconde à des valeurs respectives prédéterminées de seuil, et
- elle active le dispositif à organe de manoeuvre (16) lorsque la valeur de la dérivée première ou de la dérivée seconde de la vitesse d'avance du véhicule à moteur dépasse une valeur associée de seuil.

2. Système selon la revendication 1, dans lequel le dispositif générateur comprend un accéléromètre (10) connecté à ladite unité (2).

3. Système selon la revendication 1, caractérisé en ce que le dispositif générateur de signaux représentatifs de l'accélération verticale du châssis est constitué par l'unité électronique (2) de commande et d'exploitation disposée afin qu'elle calcule la dérivée seconde de la vitesse d'avance du véhicule à moteur et la compare à un seuil prédéterminé, cette dérivée seconde étant corrélée quantitativement à l'accélération verticale du châssis.
